# EUROPEAN PATENT APPLICATION

(11) **EP 2 727 710 A2**
(43) Date of publication of application: **07.05.2014**
(21) Application number: 13190702.4
(22) Date of filing: 29.10.2013
(51) Int. Cl.: B29C 70/30, F03D 1/06

(54) **A wind turbine rotor blade with fabric skin and associated method for assembly**

(30) Priority: 31.10.2012 US 201213664603
(71) Applicant: General Electric Company, Schenectady, New York 12345 (US)
(72) Inventor: Fang, Biao, Schenectady, NY New York 12345 (US); Olson, Steven Haines, Greenville, SC South Carolina 29615 (US); Lin, Wendy Wen-Ling, Niskayuna, NY New York 12309 (US); Krishnamurthy, Sriram, 560066 Bangalore (IN); Haridasu, Balaji, 560066 Bangalore (IN); Jadhav, Prakash Kashiram, 560066 Bangalore (IN); Daggumati, Subbareddy, 560066 Bangalore (IN); Subramanian, Suresh, 560066 Bangalore (IN); Finn, Scott Roger, Niskayuna, NY New York 12309 (US); Kulmi, Udit, 560066 Bangalore (IN); Srinivasan Chandrasekaran, Vasan Churchill, 560066 Bangalore (IN)
(74) Representative: Bedford, Grant Richard

(57) **Abstract**

A rotor blade 16 for a wind turbine 10 includes an internal support structure 50 extending span-wise from a blade root 34 to a blade tip 32. A plurality of ribs 62 are fixed to and spaced along the internal support structure 50, with each rib 62 extending in a generally chord-wise direction and having a generally aerodynamic blade contour. A plurality of chord-wise oriented fabric strips 66 are affixed to the ribs 62 in a tensioned state, wherein the fabric strips 66 define an aerodynamic outer skin of the rotor blade 16.

## Description

The present disclosure relates in general to rotor blades for wind turbines, and more particularly to a tensioned fabric rotor blade and methods for assembling such rotor blades for wind turbines.

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

The construction of a modem rotor blade generally includes skin or shell components, span-wise extending spar caps, and one or more shear webs. The shell components, typically manufactured from layers of fiber composite and a lightweight core material, form the exterior aerodynamic foil shape of the rotor blade. The spar caps provide increased rotor blade strength by integrating one or more structural elements running along the span of the rotor blade on both interior sides of the rotor blade. Shear webs are structural beam-like components running essentially perpendicular between the top and bottom spar caps and extending across the interior portion of the rotor blade between the outer skins.

The size, shape, and weight of rotor blades are factors that contribute to energy efficiencies of wind turbines. An increase in rotor blade size increases the energy production of a wind turbine, while a decrease in weight furthers the efficiency of a wind turbine. Furthermore, as rotor blade sizes grow, extra attention needs to be given to the structural integrity of the rotor blades. Presently, large commercial wind turbines in existence and in development are capable of generating from about 1.5 to about 12.5 megawatts of power. These larger wind turbines may have rotor blade assemblies larger than 90 meters in diameter. Additionally, advances in rotor blade shape encourage the manufacture of a forward swept-shaped rotor blade having a general arcuate contour from the base to the tip of the blade, providing improved aerodynamics. Accordingly, efforts to increase rotor blade size, decrease rotor blade weight, and increase rotor blade strength, while also improving rotor blade aerodynamics, aid in the continuing growth of wind turbine technology and the adoption of wind energy as an alternative energy source.

As the size of wind turbines increases, particularly the size of the rotor blades, so do the respective costs of manufacturing, transporting, and assembly of the wind turbines. The economic benefits of increased wind turbine sizes must be weighed against these factors. For example, to improve stiffness/weight ratio, the current blade architecture demands higher stiffness materials (e.g., carbon) to be used in critical load bearing components, such as the spar caps, which significantly increases the overall cost of wind energy production. As blades get wider and longer, transportation limitations, in both maximum chord width and blade length, start to pose restrictions on blade design. Conventional blade manufacturing processes generally require high upfront equipment costs in molds and associated labor costs, particularly for the shell components.

One known strategy for reducing the costs of pre-forming, transporting, and erecting wind turbines having rotor blades of increasing sizes is to manufacture the rotor blades in blade sections. Each blade section may include a portion of the span-wise extending spar caps and shear webs, or each blade section may be assembled onto large spar caps that extend the full span of the rotor blade. After the individual blade sections are transported to the erection destination, the blade sections are assembled. However, manufacture of current blade sections is difficult. For example, current manufacturing and assembly techniques have encountered problems with bonding line control, edge contour control, reparability of the various blade sections, weight reduction, and the handling of larger components, such as span-wise extending spar caps.

Thus, an improved rotor blade and method for assembling such a rotor blade for a wind turbine would be desired in the art.

Various aspects and advantages of the invention will be set forth in part in the following description, or may be clear from the description, or may be learned through practice of the invention.

In one embodiment, a rotor blade for a wind turbine is disclosed. The blade includes an internal support structure extending span-wise from a blade root to a blade tip. This internal support structure includes a plurality of fixed, spaced apart ribs extending in a generally chord-wise direction. The ribs have a generally aerodynamic blade contour. A plurality of chord-wise oriented fabric strips are affixed to the ribs in a tensioned state, wherein the fabric strips define an aerodynamic outer skin of the rotor blade.

In various embodiments, the internal support structure may include any manner of span-wise extending reinforcement or support elements interconnecting the ribs to add structural rigidity and support to the rotor blade. For example, in one embodiment, the span-wise extending support elements may include a plurality of strip members circumferentially spaced around the aerodynamic contour of ribs. The strip members may be directly connected to each other within the rotor blade, for example by a truss, brace, or other support member. In an alternate embodiment, the strips members may be spaced around the circumference of the ribs and not connected to each other.

In still a further embodiment, the internal support structure may include comprises a shear web interconnecting opposite spar caps, with the ribs fixed to the spar caps. Additional span-wise support elements may also be included in this embodiment, with the ribs also connected to these additional elements.

In certain embodiments, the support structure may also include a leading edge member and a trailing edge member (e.g., protective or structural cap members) interconnecting the ribs along the respective leading and trailing edge of the rotor blade.

In yet another embodiment, the support structure may be defined by a truss structure having chord-wise elements connected to span-wise elements so as to define a generally closed-cell skeleton frame structure, with the chord-wise elements defining the ribs. The tensioned fabric is connected to the ribs, and may also be connected to the span-wise elements.

The ribs may be variously configured in accordance with aspects of the invention. For example, in one embodiment the ribs formed from multiple components that are attached to the span-wise extending support elements to define a generally closed loop structure once assembled.

In an alternate embodiment, the ribs are individually formed closed loop elements that are subsequently fixed to the span-wise extending support elements. For example, the ribs may be separately formed in a filament winding process and subsequently fixed to the span-wise extending support elements. In an alternate embodiment, the ribs may be wound directly onto the span-wise extending support elements.

In particular embodiments, the fabric strips have a span-wise width so as to span between and attach to at least adjacent ones of the ribs. The opposed chord-wise edges of adjacent fabric strips may abut or overlap along a common rib.

The fabric strips may, in certain embodiments, have a chord-wise length such that opposite transverse edges of the fabric strips are joined together along a common one of the span-wise extending support elements, for example along a common spar cap, leading edge member, or trailing edge member.

It should be appreciated that any combination of finishing steps may be applied to the fabric strips to enhance the aerodynamic shape and performance of the rotor blade, including reinforcing the seams between adjacent strips, or coating the strips with a resin or other material to provide and essentially seamless outer surface.

The present invention also encompasses various method embodiments for making a rotor blade for a wind turbine, as described above. An exemplary method may include forming a span-wise internal support structure, such as any conventional shear web/spar cap, truss, or grid assembly. A plurality of aerodynamically-shaped ribs are configured on the internal support structure, with the ribs spaced apart span-wise along the internal support structure and extending in a generally chord-wise direction. Additional span-wise extending reinforcement or support elements may be added. A plurality of chord-wise oriented fabric strips are then wound under tension over the ribs. The fabric strips are tensioned over the rib structure to define an aerodynamic outer skin of the rotor blade. The fabric strips may also be tensioned in the chord-wise and span-wise direction.

The ribs may be formed by attaching multiple components to the spar caps of the internal support structure. In a particular method embodiment, the ribs are closed-loop elements formed in a filament winding process. For example, the ribs may be wound directly onto the internal support structure in one embodiment, or may be separately wound and subsequently joined to the internal support structure.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
Fig. 1 is a side view of a wind turbine according to one embodiment of the present disclosure;
Fig. 2 is a perspective view of an exemplary wind turbine rotor blade;
Fig. 3 is a perspective view of an embodiment of internal blade support structure with chord-wise oriented ribs;
Fig. 4 is a perspective view of an alternate embodiment of internal blade support structure with chord-wise oriented ribs;
Fig. 5 is a perspective view of an embodiment with fabric strips attached to the chord-wise ribs;
Fig. 6 is a perspective view of another embodiment of internal blade support structure with chord-wise oriented ribs and a plurality of span-wise extending elements;
Fig. 7 is a perspective view of an embodiment of internal blade support structure in a truss configuration;
Fig. 8 is top, partial cut-away view of an embodiment of a blade in accordance with aspects of the invention;
Fig. 9 is a cross-sectional view of an embodiment of a blade in accordance with aspects of the invention;
Fig. 10 is a cross-sectional view of a former that may be used in a filament winding process wherein ribs are wound directly onto blade support structure;
Fig. 11 is a schematic depiction of an exemplary filament winding process;
Fig. 12 is a cross-sectional view of a former that may be used in a filament winding process wherein ribs are separately formed and attached to blade support structure; and
Fig. 13 is a schematic depiction of an exemplary filament winding process.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

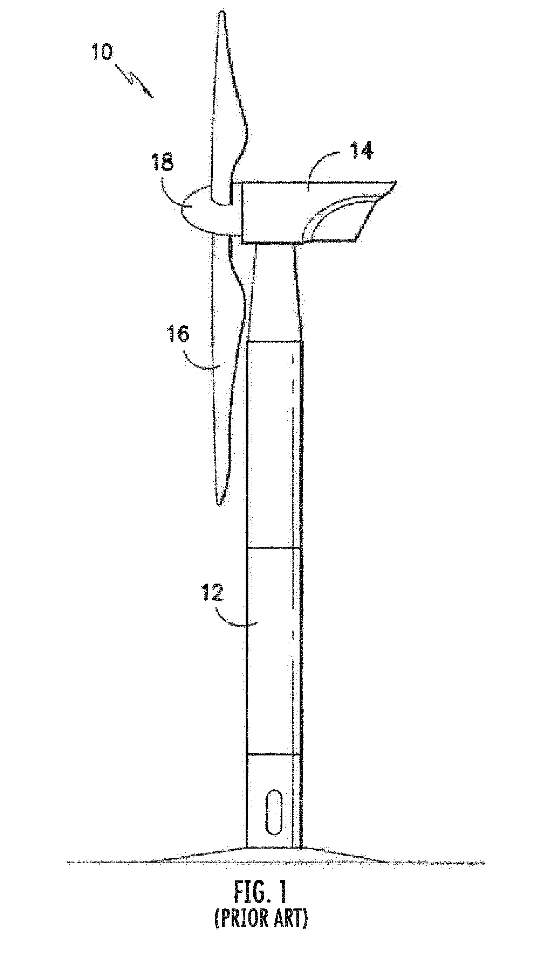

Fig. 1 illustrates a wind turbine 10 of conventional construction. The wind turbine 10 includes a tower 12 with a nacelle 14 mounted thereon. A plurality of rotor blades 16 are mounted to a rotor hub 18, which is in turn connected to a main flange that turns a main rotor shaft. The wind turbine power generation and control components are housed within the nacelle 14. The view of Fig. 1 is provided for illustrative purposes only to place the present invention in an exemplary field of use. It should be appreciated that the invention is not limited to any particular type of wind turbine configuration.

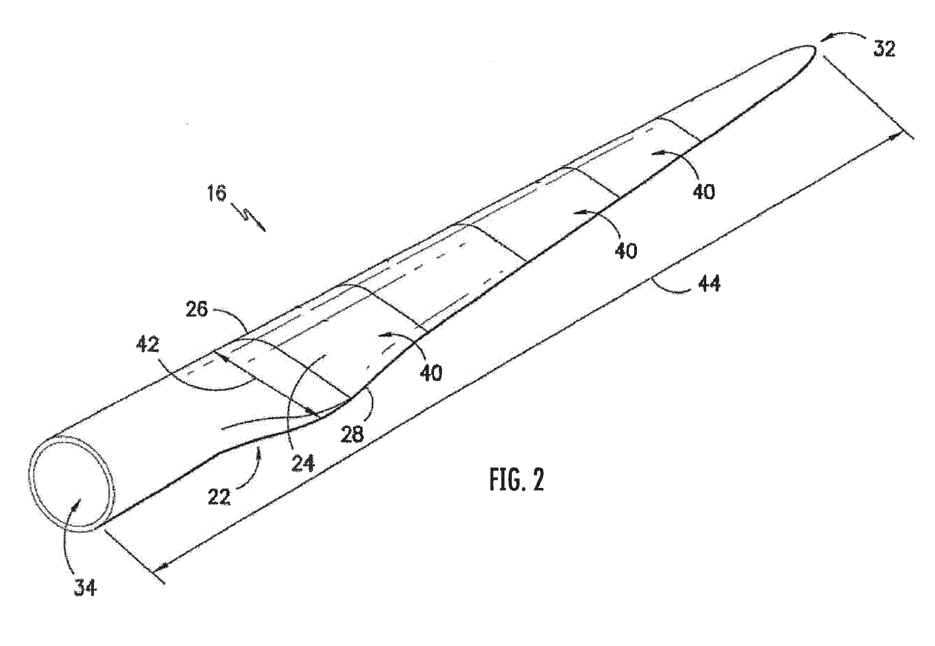

Referring to Fig. 2, a rotor blade 16 according to the present disclosure may include exterior surfaces defining a pressure side 22 and a suction side 24 extending between a leading edge 26 and a trailing edge 28, and may extend from a blade tip 32 to a blade root 34. The exterior surfaces may be generally aerodynamic surfaces having generally aerodynamic contours, as is generally known in the art.

The rotor blade 16 according to the present disclosure may include a plurality of individual fabric sections 40 between the blade tip 32 and the blade root 34. Each of fabric sections 40 may be uniquely configured so that the plurality of sections 40 define a complete rotor blade 16 having a designed aerodynamic profile, length, and other desired characteristics. For example, each of the fabric sections 40 may have an aerodynamic profile that corresponds to the aerodynamic profile of adjacent section 40. Thus, the aerodynamic profiles of the fabric sections 40 may form a continuous aerodynamic profile of the rotor blade 16.

The rotor blade 16 may, in exemplary embodiments, be curved. Curving of the rotor blade 16 may entail bending the rotor blade 16 in a generally flapwise direction and/or in a generally edgewise direction. The flapwise direction may generally be construed as the direction (or the opposite direction) in which the aerodynamic lift acts on the rotor blade 16. The edgewise direction is generally perpendicular to the flapwise direction. Flapwise curvature of the rotor blade 16 is also known as pre-bend, while edgewise curvature is also known as sweep. Thus, a curved rotor blade 16 may be pre-bent and/or swept. Curving may enable the rotor blade 16 to better withstand flapwise and edgewise loads during operation of the wind turbine 10, and may further provide clearance for the rotor blade 16 from the tower 12 during operation of the wind turbine 10.

The rotor blade 16 may further define a chord 42 and a span 44 extending in chord-wise and span-wise directions, respectively. As shown, the chord 42 may vary throughout the span 44 of the rotor blade 16.

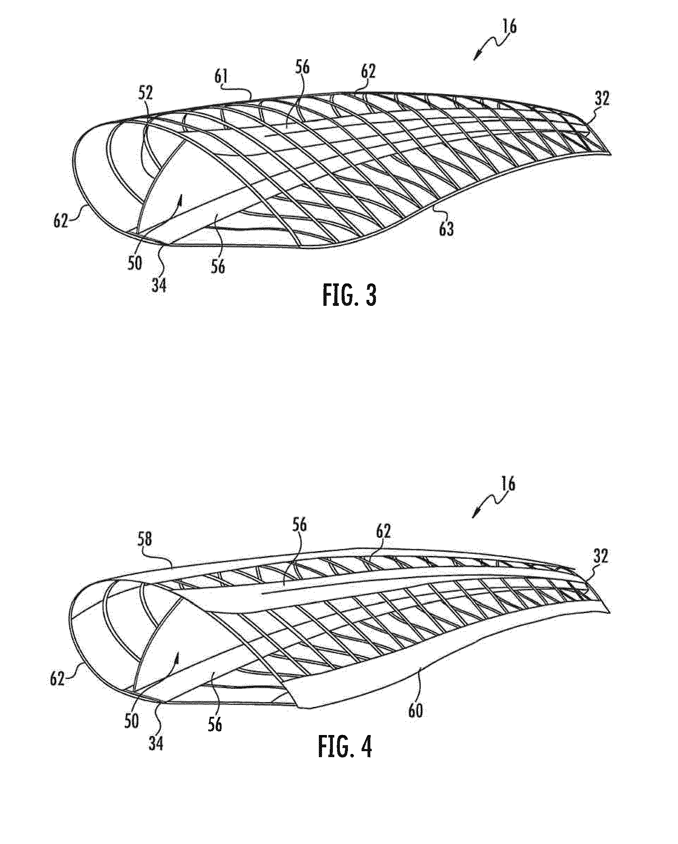

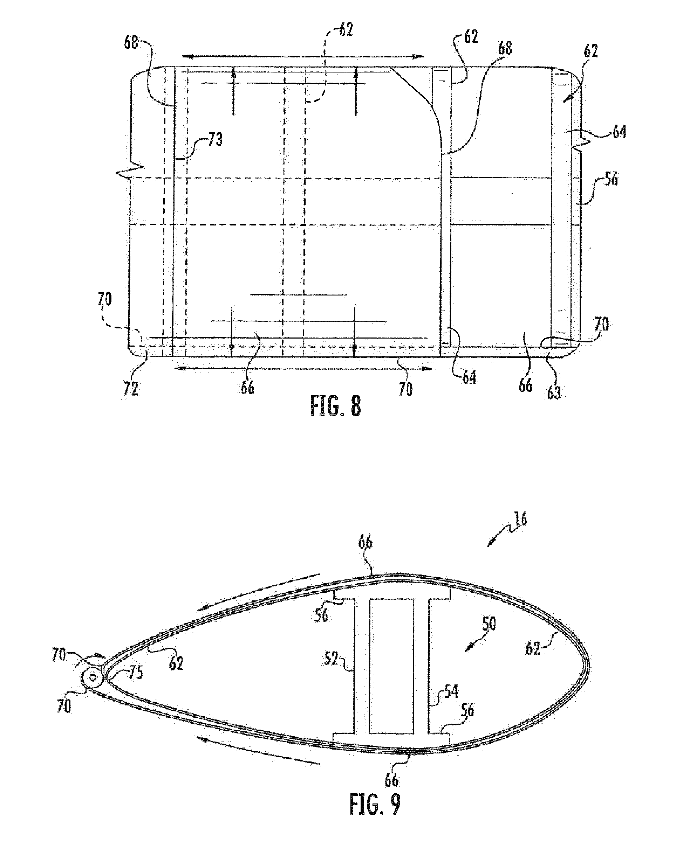

Figs. 3 through 10 illustrate various embodiments of a rotor blade 16 in accordance with aspects of the invention. Referring particularly to Figs. 3 through 6, a rotor blade 16 includes an internal support structure 50 that extends span-wise from the blade root 34 to the blade tip 32. This internal support structure 50 may be any manner of conventional structure typically used in wind turbine blades to provide rigidity and dimensional stability to the blade. For example, the support structure 50 includes a plurality of fixed, spaced-apart ribs 62 that extend in a chord-wise direction and include an outer surface 64 (Fig. 8) that defines an aerodynamic blade contour. The plurality of ribs 62 are spaced along and attached to any manner of support structure members by any suitable means, examples of which are described in greater detail below. The chord-wise length of the ribs 62 at least partially defines the overall chord 42 of the blade 16 along the span 44. Other components may be added to the ribs 62 that further contribute to the chord 42. The aerodynamic contours of the respective ribs 62 define the overall aerodynamic contour of the assembled rotor blade 16.

The configuration of the internal support structure 50 may vary widely within the scope and spirit of the invention. For example, in the embodiments of Figs. 3 and 4, the internal support structure 50 includes a single shear web 52 and associated spar caps 56 that run span-wise along the pressure side 22 and suction side 24 of the blade 16. The shear web 52 and spar cap 56 structure is often referred to as an "I-beam" structure.

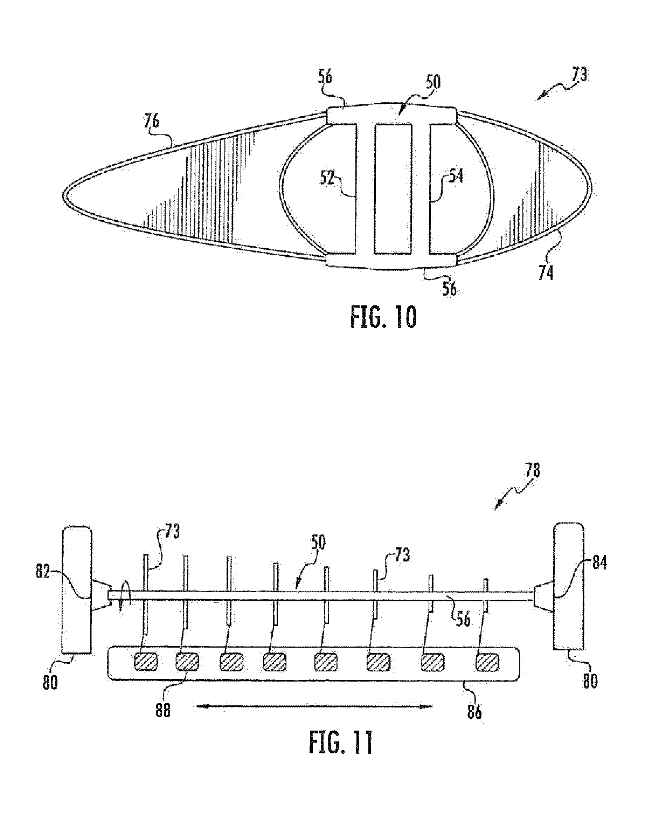

In an alternative embodiment illustrated for example in Figs. 9 and 10, the internal support structure 50 is provided by a box-beam type of structure wherein multiple shear webs 52, 54 extend between opposite spar caps 56. It should be appreciated that the invention is not limited to any particular configuration of internal support structure 50.

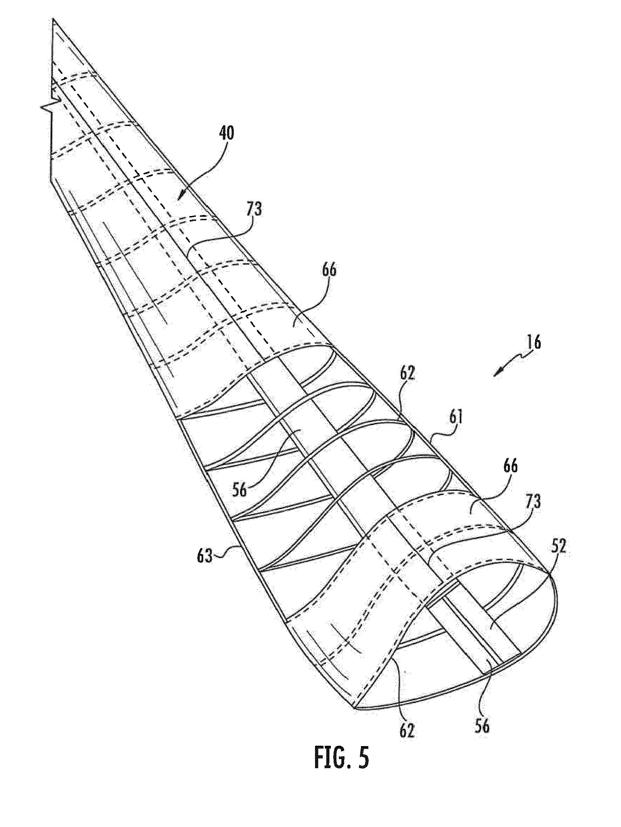

In various embodiments, the internal support structure includes a plurality of span-wise extending support elements that interconnect the ribs 62 and add overall structural support and rigidity to the internal support structure 50. For example, in the embodiment of Figs. 3 and 5, the span-wise extending support elements may be any type of leading edge support member 61 and trailing edge support member 63 that interconnect the ribs 62 and add structural rigidity to the leading and trailing edges, respectively. The spar caps 56 may also be considered as span-wise extending support elements.

In the embodiment of Fig. 4, the span-wise extending support members include a leading edge cap 58 and/or a trailing edge cap 60 that are affixed to the ribs 62 and wrap around the edges to the pressure and suction sides of the blade. It should be appreciated that any manner of additional spar members may be attached span-wise at any location along the blade 16, and so forth.

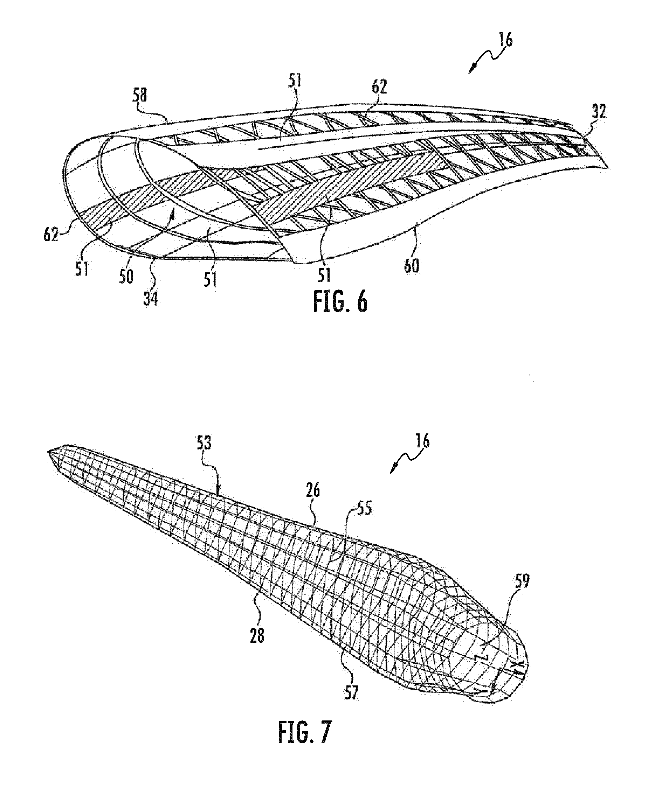

In the embodiment of Fig. 6, the internal support structure 50 includes a plurality of span-wise extending strip members 51in addition to a leading edge cap member 58 and trailing edge cap member 60. The strip members 51 need not extend along the complete span of the blade 16, and are circumferentially spaced around the aerodynamic contour of the ribs 62. It should be appreciated that, with this particular embodiment, the support structure 50 does not include a shear web or similar structure that spans between the pressure and suction sides of the blades to directly interconnect the strip or spar members 51. In other words, the members 51 are interconnected by the ribs, but not by other structure. However, in other embodiments, the members 51may be directly interconnected by a support member (e.g., a shear web 52) between the suction and pressure sides of the blade 16. The members 51 may be formed of any suitable structural material, and the members 51 need not be formed of the same material, as indicated by the different materials indicated in Fig. 6.

Fig. 7 depicts an embodiment wherein the internal support structure is configured as a truss structure 53 with a plurality of chord-wise elements 55 connected to a plurality of span-wise elements 57 to form a grid or web-type skeleton of closed cells 59. The chord-wise elements 55 may be considered as the ribs. As explained in greater detail below, a tensioned fabric is attached to the truss structure 53. The fabric may be fixed to any combination of the chord-wise elements 55 and/or span-wise elements 57. Although not depicted in Fig. 7 for sake of clarity, it should be appreciated that the truss structure 53 may also include an internal shear web extending span-wise through the blade 16. This shear web may also be formed as a truss-type of structure with a plurality of interconnected members defining a grid or we-type of shear web.

The various components of the internal support structure 50 (e.g., ribs 62, truss structure 53, span-wise strip or spar members 51, and so forth) may be formed from any suitable structural material, including metals (e.g., steel, aluminum, titanium, and their alloys or combinations thereof) or composites (e.g., GFRP, CFRP, natural composites, and sandwich composites (manufactured by hand lay-up or other methods). The materials may include a combination of metals and composites (including natural composites such as wood, and the like).

Referring to Fig. 5, a plurality of chord-wise oriented fabric strips 66 are affixed to the ribs 62 in a tensioned state. In this configuration, the fabric strips 66 define an outer skin of the rotor blade 16, including the pressure side 22 and suction side 24. In the embodiment illustrated in Fig. 5, each of the individual fabric strips 66 spans between two adjacent ribs 62. Each strip 66 has opposite chord-wise edges 68 that are attached to the outer surface 64 of the respective ribs 62 by any suitable means, including adhesives, bonding material, mechanical means, and so forth. The invention is not limited by any particular fastening means. It should be appreciated that the fabric strips 66 may have a span-wise width (defined between the edges 68) so that the strips 66 span three or more of the ribs 62, or even along the entire span of the blade 16. For example, in the embodiment depicted in Fig. 6, the fabric strip 66 spans three ribs 62.

The edges 68 of adjacent fabric strips 66 may be attached to the outer surface 64 of the ribs 62 in a direct abutting relationship, as depicted in Fig. 8. In an alternative embodiment depicted, the edges 68 may overlap on a common rib 62. In still a further embodiment, at least a portion of the ribs 62 is exposed between adjacent strips 66. A finishing tape may be applied to the seams between adjacent fabric strips 66 to both seal and tension the strips. For example, a double-sided adhesive tape may be applied to edge of a first one of the strips 66 and rolled down. The edge of the adjacent strip 66 may then be applied to the tape and rolled down, wherein the rolling process applies pressure and tension to the fabric strips. Heat and pressure may then be applied to the seam to achieve an optimum bonding of the tape.

Referring to Figs. 8 and 9, the fabric strips 66 are tensioned in a chord-wise direction (as indicated by the arrows in Figs. 8 and 9) by any suitable tensioning means. Fig. 9 depicts a tensioning roller 75 that is attached to the span-wise edges 70 of the respective fabric strips 66 in order to tension the fabric strips prior to attaching the strips to the ribs 62. The edges 70 may then be bonded along a bond area 72 (Fig. 8). As mentioned, the edges 70 may abut or overlap along the bond area 72. In an alternate embodiment, the edges 70 may be bonded together in a parallel tab bond area that may be subsequently trimmed.

In other embodiments, a mechanical fastener may be used to attached the edges 70 to the trailing edge of the blade in a tensioned state. Any type of fastener that is capable of grasping or otherwise attaching to the edges 70 of the fabric strips 66, maintaining the strips 66 in a tensioned state, and fixing the edges 70 to the blade structure along the trailing edge may be used in this regard.

As depicted by the arrows in Fig. 8, the fabric strips 66 may also be tensioned in the span-wise direction, as well as in the chord-wise direction, prior to permanently fixing the strips 66 between the ribs 62. Any suitable mechanical stretching device or process may be used in this regard, including clamping or otherwise fixing one of the chord-wise edges 68 to a respective rib 62 and subsequently stretching the fabric in the span-wise direction prior to fixing the opposite chord-wise edge 68 to a different rib 62.

As depicted in the various embodiments, it should be appreciated that the fabric strips 66 may be attached in the spaces between the various structural support members, or affixed over the structural members, or a combination thereof.

As can be particularly seen in Figs. 3 and 5, the ribs 62 may be defined as closed-loop elements that are fixed to the spar caps 56 by any suitable attachment means, such as adhesives, bonding materials, mechanical means, and so forth. In a particularly unique embodiment, each of the ribs 62 is a wound filament component formed in a conventional filament winding process. As described in greater detail below, the ribs 62 may be wound directly onto the internal support structure 50, or may be individually formed and subsequently attached to the internal support structure 50. In an alternative embodiment, the individual ribs may be molded members that are molded directly with the internal support structure 50, or individually molded and subsequently attached to the support structure 50.

In an alternate embodiment depicted in Fig. 4, the ribs 62 are not closed-loop elements, but are formed from multiple components that are attached to the spar caps 56. These components may be made from any suitable material, including alumina, steel, or composite materials.

The blades 16 are not limited by any particular type of fabric for the fabric strips 66. A relatively low cost, light-weight architecture fabric may be desirable in certain embodiments. The fabric may be a woven or non-woven material, including film materials. The fabric material may be a single layer or formed from multiple layers, such as multi-axial fabrics. The fabric material may be resin impregnated and eventually cured to provide a relatively stiff outer skin to the blade 16. Certain types of architecture fabrics that may be used for the present invention include PTFE-coated fiberglass or PVC-coated polyester fabrics. ETFE film may also be suitable in certain environments.

Any manner of finishing process or product may be applied to the fabric strips 66 to provide a relatively smooth aerodynamic surface for the pressure 22 and suction 24 sides of the blade. For example, most architectural PVC polyesters have a top coating applied to their exterior surface to improve the appearance and extend the life of the material. Typically, this top coat may be acrylic, polyvinylidene fluoride (PVDF), a PVDF top coat, or a polyvinyl fluoride (PVF) film layer that is laminated to the PVC fabric during manufacture. As mentioned, the fabric strips 66 may be impregnated with a resin, or coated with a resin after application to the ribs 62. Reinforcing tapes may be applied over the seams between adjacent fabric strips 66.

As mentioned, the ribs 62 may be formed in a filament winding process. In a particular filament winding process as depicted in Figs. 10 and 11, the ribs 62 are wound directly onto the internal support structure 50 with a (schematically depicted) filament winding machine 78. Referring to Fig. 10, rib formers 73 are attached to the internal support structure 50 along the span-wise length thereof at locations corresponding to the desired rib locations. In the illustrated embodiment, the rib formers 73 are constructed by attaching a leading edge former 74 and a trailing edge former 76 to the spar caps 56, leaving the top surface of the spar caps 56 exposed. Referring to Fig. 11, the internal support structure 50 is rotationally mounted between base members 80, wherein one of the base members 80 is a driven end 82, and the other base member 80 may be a bearing end 84. This configuration may be accomplished by simply locking the shear web/spar cap structure into respective rotatable mounts. In this manner, the internal support structure 50 defines a filament winding mandrel. A carriage 86 may be provided on which a plurality of continuous filament supplies 88 are located, such as continuous glass filaments, and the like. The carriage 86 is configured for traversing movement in the longitudinal direction of the mandrel, as indicated by the arrow in Fig. 11. A respective filament supply 88 is associated with each rib former 73. In this configuration, as the mandrel (support structure 50) is rotated, the continuous filament strands are wound onto the rib formers 73 in the fiber winding process. The process may be a wet filament process wherein the filaments are passed through a resin bath prior to being deposited on the formers 73. Alternatively, the filament supplies 88 may be impregnated with a resin.

Once a sufficient length of the continuous filaments are wound onto the formers 73 such that the ribs 62 have the desired degree of thickness, rigidity, and stability, the process is terminated and the ribs are cured. The resin may be sufficient for adhering the ribs 68 directly onto the spar caps 56 in the curing process. However, additional adhesives or bonding material may also be utilized to insure a stable joint between the ribs 62 and spar caps 56. Once the ribs 62 are cured, the formers 74, 76 may be removed, leaving the closed-loop individual ribs 62 wound directly onto the support structure 50.

It should be readily appreciated that the ribs 62 may be individually wound onto the support structure 50 in a winding process wherein a filament supply 88 is moved from one former 73 to the next former 73 in a serial operation. In other words, it is not a necessity that all of the formers 73 are wound with the filament supplies 88 in a simultaneous operation.

It should be appreciated that the filament winding process may be controlled such that the filaments 88 are applied with a relatively high tension, resulting in ribs 62 having a higher rigidity and strength. The orientation of the filaments 88 may also be controlled so that successive layers are plied or oriented differently from the previous layer. Any suitable carbon or glass fiber, or other types of fibers, may be used to form the ribs 62.

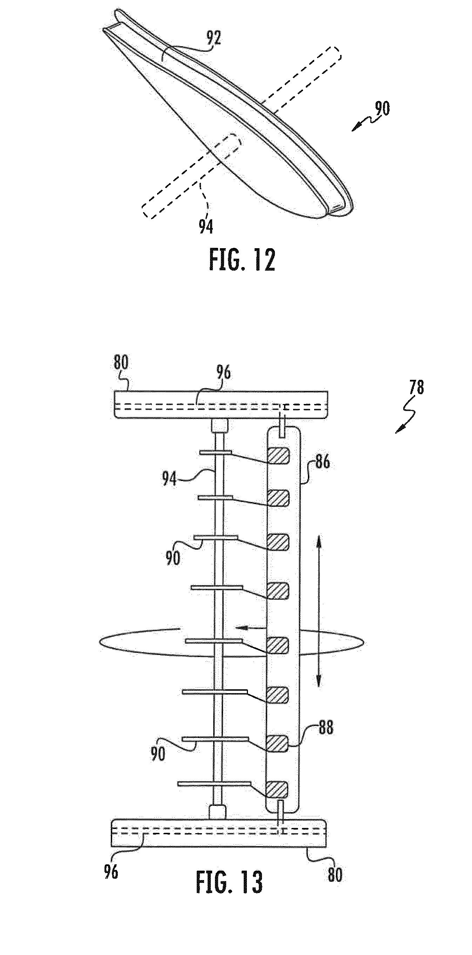

Figs. 12 and 13 depict an embodiment wherein the ribs 62 are individually formed as wound filament components and then subsequently attached to the internal support structure 50. Fig. 12 illustrates a rib former 90 having the general aerodynamic shape of the desired rib 60. The former 90 is configured for mounting onto any suitable mandrel rod 94 and includes a fiber laying surface 92. Referring to Fig. 13, a plurality of the formers 90 are mounted onto the mandrel 94 and are subsequently wound with a continuous filament from filament supplies 88 provided on a carriage 86. It should be appreciated that this winding process may be conducted in accordance with the embodiment of Fig.11 wherein the mandrel 94 is rotated and the carriage 86 is traversed in a back and forth motion relative to the formers 90.

In the embodiment depicted in Fig. 13, the mandrel 94 with attached formers 90 is vertically oriented and rotationally fixed in the end bases 80. The carriage 86 in this particular embodiment is rotated around the mandrel 84, as depicted by the arrow in Fig. 13. A track 96 may be provided in the bases 80 to guide the carriage 86 in its rotational path. The carriage 86 may also be driven in a traversing vertical motion as it rotates, as indicated by the arrow in Fig. 13, so as to lay the fibers on the surface 92 of the former 90 in the desired pattern and orientation. As discussed above, once the ribs 62 are formed on the formers 90, the winding process may be terminated and the individual formers moved to a curing station. Once cured, the ribs 62 may be removed from the formers 90 and subsequently attached to the internal support structure 50, for example, to the spar caps 56, to form the structure depicted in Figs. 3 and 4.

It should thus be appreciated from the above discussion that the present invention also encompasses various method embodiments for making a rotor blade 16 for a wind turbine 10, wherein the method includes forming a span-wise internal support structure 50. A plurality of ribs 62 are configured on the support structure 50, with the ribs 62 spaced span-wise along the internal support structure 50 with each rib 62 extending in a generally chord-wise direction. The ribs 62 have a generally aerodynamic outer surface and define the overall aerodynamic profile of the blades 16. The method includes wrapping a plurality of chord-wise oriented fabric strips over the ribs and tensioning the fabric strips in at least a chord-wise direction to define the aerodynamic outer skin of the rotor blade.

The method may include forming each of the ribs 62 as an individually formed closed-loop element fixed to the spar caps 56. For example, the ribs 62 may be formed in a filament winding process wherein the ribs are wound directly onto the spar caps 56, as discussed above with respect to Figs. 10 and 11. In an alternate embodiment, the ribs may be individually formed in a fiber winding process and then subsequently attached to the internal support structure 50, as discussed above with respect to the Figs. 12 and 13.

The various method embodiments may include tensioning the fabric strips in a span-wise and chord-wise direction over the ribs 62 prior to final fastening of the fabric strips 66 to the ribs. The fabric strips may be fixed to adjacent ribs in one method embodiment, or span at least three of the ribs or more in an alternate embodiment.

In a particular method embodiment, the chord-wise edges 68 of the fabric strips 66 may be attached to a respective rib in an abutting relationship. In an alternate embodiment, the edges 68 may be spaced apart on the ribs 62.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A rotor blade for a wind turbine, the rotor blade comprising:
   an internal support structure extending span-wise from a blade root to a blade tip;
   said internal support structure including a plurality of fixed, spaced apart ribs, each said rib extending in a generally chord-wise direction and comprising an outer surface having a generally aerodynamic blade contour;
   a plurality of chord-wise oriented fabric strips having a span-wise width and opposite transverse edges, said fabric strips affixed to said ribs in a tensioned state; and
   wherein said fabric strips are adjacently disposed along a span-wise length of said internal support structure and define an aerodynamic outer skin of said rotor blade.
2. The rotor blade as in clause 1, wherein said internal support structure comprises a plurality of span-wise extending support elements interconnecting said ribs.
3. The rotor blade as in any preceding clause, wherein said span-wise extending support elements comprise a plurality of strip members circumferentially spaced around said aerodynamic contour of said ribs.
4. The rotor blade as in any preceding clause, wherein said strip members are not directly connected to each other within said rotor blade between a pressure side and a suction side of said rotor blade.
5. The rotor blade as in any preceding clause, further comprising at least one support member interconnecting at least two of said strip members between a pressure side and a suction side of said rotor blade.
6. The rotor blade as in any preceding clause, wherein said internal support structure comprises a shear web interconnecting opposite spar caps, said ribs fixed to said spar caps.
7. The rotor blade as in any preceding clause, wherein said support structure further comprises a leading edge member and trailing edge member interconnecting said ribs along a respective leading and trailing edge of said rotor blade.
8. The rotor blade as in any preceding clause, wherein said support structure comprises a truss structure having chord-wise elements connected to span-wise elements so as to define a generally closed-cell skeleton frame structure, said chord-wise elements defining said ribs.
9. The rotor blade as in any preceding clause, wherein said ribs are formed from multiple components attached to said span-wise extending support elements.
10. The rotor blade as in any preceding clause, wherein each of said ribs is an individually formed closed loop element fixed to said span-wise extending support elements.
11. The rotor blade as in any preceding clause, wherein said ribs are a wound filament component.
12. The rotor blade as in any preceding clause, wherein said ribs are wound directly onto said span-wise extending support elements.
13. The rotor blade as in any preceding clause, wherein said ribs are separately wound components that are subsequently fixed to said span-wise extending support elements.
14. The rotor blade as in any preceding clause, wherein each of said fabric strips has a span-wise width so as to span between and attach to at least adjacent ones of said ribs.
15. The rotor blade as in any preceding clause, wherein opposed chord-wise edges of adjacent said fabric strips abut or overlap along a common said rib.
16. The rotor blade as in any preceding clause, wherein said internal support structure comprises a plurality of span-wise extending support elements interconnecting said ribs, each of said fabric strips having a chord-wise length such that said opposite transverse edges of said fabric strips are joined together along a common one of said span-wise extending support elements.
17. The rotor blade as in any preceding clause, wherein said span-wise extending support elements comprising a leading edge member and trailing edge member interconnecting said ribs along a respective leading edge and trailing edge of said rotor blade, said transverse edges of said fabric strips joined together along one of said leading or trailing edge members.
18. The rotor blade as in any preceding clause, wherein said span-wise extending support elements comprise opposite spar caps interconnected by a shear web, said ribs fixed to said spar caps, said transverse edges of said fabric strips joined together along one of said spar caps.
19. A method for making a rotor blade for a wind turbine, comprising:
   forming an internal support structure having a plurality of chord-wise oriented ribs spaced span-wise along the internal support structure, each rib having an outer surface with a generally aerodynamic blade contour; and
   wrapping a plurality of chord-wise oriented fabric strips over the ribs and tensioning the fabric strips in a chord-wise direction to define an aerodynamic outer skin of the rotor blade.
20. The method as in any preceding clause, comprising forming the ribs as closed-loop components in a filament winding process wherein the ribs are wound directly onto the internal support structure.
21. The method as in any preceding clause, comprising forming the ribs as closed-loop elements separate from the internal support structure in a filament winding process and subsequently joining the ribs to the internal support structure.
22. The method as in any preceding clause, comprising spanning each of the fabric strips between at least two of the ribs.
23. The method as in any preceding clause, wherein opposed chord-wise edges of adjacent fabric strips are attached to a common rib in an abutting or overlapping manner.
24. The method as in any preceding clause, wherein the internal support structure comprises a plurality of span-wise extending support elements interconnecting the ribs, the method further comprising joining together opposite transverse edges of the fabric strips along a common one of the span-wise extending support elements.
25. The method as in any preceding clause, wherein the span-wise extending support elements include a leading edge member and a trailing edge member interconnecting the ribs along a respective leading edge and trailing edge of the rotor blade, the method further comprising joining the transverse edges of the fabric strips together along one of the leading or trailing edge members.
26. The method as in any preceding clause, wherein the span-wise extending support elements include opposite spar caps interconnected by a shear web, the ribs fixed to the spar caps, the method further comprising joining the transverse edges of the fabric strips together along one of the spar caps.

## Claims

1. A rotor blade (16) for a wind turbine (10), the rotor blade (16) comprising:
an internal support structure (50) extending span-wise from a blade root to a blade tip;
said internal support structure (50) including a plurality of fixed, spaced apart ribs (62), each said rib (62) extending in a generally chord-wise direction and comprising an outer surface having a generally aerodynamic blade contour;
a plurality of chord-wise oriented fabric strips (66) having a span-wise width and opposite transverse edges, said fabric strips (66) affixed to said ribs (62) in a tensioned state; and
wherein said fabric strips (66) are adjacently disposed along a span-wise length of said internal support structure (50) and define an aerodynamic outer skin of said rotor blade.

2. The rotor blade (16) as in claim 1, wherein said internal support structure (50) comprises a plurality of span-wise extending support elements interconnecting said ribs.

3. The rotor blade (16) as in any preceding claim, wherein said span-wise extending support elements comprise a plurality of strip members circumferentially spaced around said aerodynamic contour of said ribs (62).

4. The rotor blade (16) as in any preceding claim, wherein said strip members (66) are not directly connected to each other within said rotor blade between a pressure side and a suction side of said rotor blade.

5. The rotor blade (16) as in any preceding claim, further comprising at least one support member interconnecting at least two of said strip members (66) between a pressure side and a suction side of said rotor blade (16).

6. The rotor blade (16) as in any preceding claim, wherein said internal support structure (50) comprises a shear web interconnecting opposite spar caps, said ribs fixed to said spar caps.

7. The rotor blade (16) as in any preceding claim, wherein said support structure (50) further comprises a leading edge member and trailing edge member interconnecting said ribs along a respective leading and trailing edge of said rotor blade.

8. The rotor blade (16) as in any preceding claim, wherein said support structure (50) comprises a truss structure having chord-wise elements connected to span-wise elements so as to define a generally closed-cell skeleton frame structure, said chord-wise elements defining said ribs.

9. The rotor blade (16) as in any preceding claim, wherein said ribs (62) are formed from multiple components attached to said span-wise extending support elements.

10. The rotor blade (16) as in any preceding claim, wherein each of said ribs (62) is an individually formed closed loop element fixed to said span-wise extending support elements.

11. The rotor blade (16) as in any preceding claim, wherein said ribs (62) are a wound filament component.

12. The rotor blade (16) as in any preceding claim, wherein said ribs (62) are wound directly onto said span-wise extending support elements.

13. The rotor blade (16) as in any preceding claim, wherein said ribs (62) are separately wound components that are subsequently fixed to said span-wise extending support elements.

14. The rotor blade (16) as in any preceding claim, wherein each of said fabric strips (66) has a span-wise width so as to span between and attach to at least adjacent ones of said ribs (62).

15. A method for making a rotor blade (16) for a wind turbine (10), comprising:
forming an internal support structure (50) having a plurality of chord-wise oriented ribs (62) spaced span-wise along the internal support structure, each rib (62) having an outer surface with a generally aerodynamic blade contour; and
wrapping a plurality of chord-wise oriented fabric strips (66) over the ribs (62) and tensioning the fabric strips in a chord-wise direction to define an aerodynamic outer skin of the rotor blade (16).
